# EUROPÄISCHE PATENTANMELDUNG

(11) **EP 4 236 308 A1**
(43) Veröffentlichungstag der Anmeldung: **30.08.2023**
(21) Anmeldenummer: 23155957.6
(22) Anmeldetag: 10.02.2023
(51) Int. Cl.: H04N 7/18, H04N 21/4223, H04N 21/84

(54) **VERTEILTES MONITORING-SYSTEM FÜR FILMAUFNAHMEN**

(30) Priorität: 24.02.2022 DE 102022104410
(71) Anmelder: Arnold & Richter Cine Technik GmbH & Co. Betriebs KG, 80807 München (DE)
(72) Erfinder: POPP, Hermann, 81547 München (DE); ZEIDLER, Frank, 81827 München (DE); MANN, Alexander, 80686 München (DE); HAUBMANN, Michael, 1230 Wien (AT)
(74) Vertreter: Manitz Finsterwald Patent- und Rechtsanwaltspartnerschaft mbB

(57) **Zusammenfassung**

Die vorliegende Erfindung betrifft ein verteiltes Monitoring-System für Filmaufnahmen mit einem Sendemodul und einem Anzeigemodul, wobei das Sendemodul und das Anzeigemodul über ein Datennetzwerk miteinander verbunden sind, wobei das Sendemodul ausgebildet ist, Bilddaten und bevorzugt auch Audiodaten über das Datennetzwerk an das Anzeigemodul zu übertragen, wobei das Sendemodul zusätzlich Metadaten an das Anzeigemodul überträgt, wobei das Anzeigemodul ausgebildet ist, die Bilddaten und die Metadaten anzuzeigen, und das Anzeigemodul eine Bildverarbeitungseinheit aufweist, welche ausgebildet ist, eine Veränderung der Bilddaten vorzunehmen, bevor die Bilddaten angezeigt werden.

## Beschreibung

Die vorliegende Erfindung betrifft ein verteiltes Monitoring-System für Filmaufnahmen.

Professionelle Filmkameras, wie sie beispielsweise bei Film- und Fernsehproduktikonen eingesetzt werden, erzeugen üblicherweise in der Kamera selbst verschiedene Ausgabevarianten der von der Filmkamera erfassten Bilddaten. Diese Ausgabevarianten der Bilddaten werden dann beispielsweise an verschiedene Monitore auf dem Filmset ausgegeben, so dass die erfassten Bilddaten auf den Monitoren z.B. jeweils in unterschiedlichen Darstellungen betrachtet werden können.

Es ist also gewünscht, unterschiedliche Bilddaten zu erzeugen, wobei beispielsweise auf einem Monitor eine Falschfarbendarstellung, auf einem anderen Monitor eine Farbkorrektur und auf einem weiteren Monitor die Darstellung einer Fokusindikation benötigt werden kann. Solche verschiedenen Darstellungen müssen durch die Filmkamera erzeugt werden, wobei die Anzahl der möglichen verschiedenen Darstellungen in der Regel durch die Hardware- und Softwareressourcen der Filmkamera limitiert ist. Es können gegebenenfalls dann nicht alle Monitoring-Anforderungen erfüllt werden.

Es ist daher die der Erfindung zugrundeliegende Aufgabe, ein Monitoringsystem anzugeben, welches flexibel an verschiedene Monitoring-Anforderungen anpassbar ist.

Diese Aufgabe wird durch ein Monitoringsystem gemäß Anspruch 1 gelöst.

Erfindungsgemäß wird ein verteiltes Monitoring-System für Filmaufnahmen angegeben, welches ein Sendemodul und ein Anzeigemodul umfasst, wobei das Sendemodul und das Anzeigemodul über ein Datennetzwerk miteinander verbunden sind. Das Sendemodul ist ausgebildet, Bilddaten und bevorzugt auch Audiodaten über das Datennetzwerk an das Anzeigemodul zu senden bzw. zu übertragen, wobei das Sendemodul zusätzlich Metadaten an das Anzeigemodul überträgt, wobei das Anzeigemodul ausgebildet ist, eine Anzeige der Bilddaten und der Metadaten, insbesondere wahlweise, zu ermöglichen. Zudem weist das Anzeigemodul eine Bildverarbeitungseinheit auf, welche ausgebildet ist, eine Änderung der Bilddaten vorzunehmen, bevor die Bilddaten angezeigt werden.

Das Sendemodul kann insbesondere Teil einer Filmkamera sein, wie unten noch genauer erläutert wird.

Gemäß der Erfindung werden also durch das Sendemodul Bilddaten über das Datennetzwerk für das Anzeigemodul (d.h. zum Beispiel einen Monitor) bereitgestellt, wobei das Anzeigemodul aber ausgebildet ist, eine Veränderung der Bilddaten vorzunehmen. Dies hat den Vorteil, dass das Sendemodul z.B. nur eine Variante der Bilddaten ausspielen muss. Eine gewünschte Veränderung der Bilddaten (z.B. um Falschfarben anzuzeigen oder eine Farbveränderung vorzunehmen) kann dann durch das Anzeigemodul vorgenommen werden. Das Sendemodul bzw. die Kamera muss dann weniger Rechenleistung erbringen und muss beispielsweise nicht verschiedene Varianten der Bilddaten zur Verfügung stellen.

Es kann ausreichen, dass das Sendemodul genau eine Variante der Bilddaten an das Datennetzwerk überträgt. An das Datennetzwerk kann eine Vielzahl von Anzeigemodulen angeschlossen sein, wobei die verschiedenen Anzeigemodule unterschiedliche Veränderungen der Bilddaten vornehmen und damit unterschiedliche Varianten der Bilddaten anzeigen können. Das Monitoringsystem kann also leicht erweitert und damit flexibel an die jeweilige Monitoring-Aufgabe angepasst werden.

Durch die geringere in dem Sendemodul bzw. der Kamera benötigte Rechenleistung kann die Kamera bevorzugt kleiner ausgebildet werden und/oder kann mit einer Akkuladung einen längeren Betrieb ermöglichen.

Das Sendemodul kann bevorzugt auch Audiodaten an das Datennetz übermitteln, wobei die Audiodaten von dem Anzeigemodul oder den Anzeigemodulen wiedergegeben und auch verändert werden können.

Zudem ist es möglich, dass das Sendemodul simultan Bilddaten verschiedener Qualität, d.h. verschiedene Varianten der Bilddaten, über das Datennetzwerk aussendet. So können z.B. drei verschiedene Auflösung (beispielsweise SD, HD und 4K) gleichzeitig in den Bilddaten übertragen werden, insbesondere in verschiedenen Datenströmen. Das Anzeigemodul kann dann z.B. diejenige Variante der Bilddaten verwenden, die mit der geringsten Veränderung der Bilddaten angezeigt werden kann. Die Bilddaten oder die Varianten der Bilddaten können auch nur Bildausschnitte umfassen, wie beispielsweise die Region of Interest (ROI) eines Autofokussystems.

Werden Bilddaten verschiedener Qualität gleichzeitig vom Sendemodul zur Verfügung gestellt, so ergibt sich der Fall, dass im Datennetzwerk mehr Bilddaten vorhanden sind, als ein einzelnes Anzeigemodul eigentlich benötigen würde. Dies ist aber vorteilhaft, wenn verschiedene Anzeigemodule vorhanden sind, die dann verschiedene Qualitäten der Bilddaten dem Datennetzwerk entnehmen können.

Ebenfalls ist es möglich, dass das Sendemodul simultan Audiodaten verschiedener Qualität, d.h. verschiedene Varianten der Audiodaten, über das Datennetzwerk aussendet. Die vorstehenden Ausführungen zu den Bilddaten gelten dann entsprechend für die Audiodaten.

Durch den Einsatz des Datennetzwerks können die Anzeigemodule nicht nur beispielsweise das Bild einer Kamera bzw. die Bilddaten eines Sendemoduls anzeigen, sondern es ist möglich, zwischen der Anzeige verschiedener im Datennetzwerk vorhandener Sendemodule/Kameras zu wählen.

Beispielsweise kann es sich bei dem Anzeigemodul um einen Sucher einer Kamera (Electronic View Finder - EVF) handeln. Somit können in dem Sucher der Kamera auf einfache Weise nicht nur Bilddaten der direkt verbundenen Kamera, sondern auch weiterer Kameras betrachtet werden. Das Datennetzwerk dient dementsprechend als virtuelle Kreuzschiene.

Um über das Datennetzwerk mehrere Anzeigemodule mit den Bilddaten zu erreichen, kann das Sendemodul einen Multicast- und/oder Broadcast verwenden, um die Bilddaten und/oder die Audiodaten und/oder die Metadaten an die Anzeigemodule zu übertragen.

Bei den Metadaten kann es sich um Zusatzinformationen zu den Bilddaten und/oder Audiodaten handeln, die beispielsweise die aufnehmende Kamera, das Farbprofil, die Kameraposition und dergleichen enthalten.

Das Übertragen der Bilddaten und/oder der Audiodaten über das Datennetzwerk kann beispielsweise mittels eines Datenstroms, welcher in Datenpakete unterteilt ist, erfolgen. Das Anzeigemodul empfängt dann den Datenstrom, nimmt bevorzugt eine Veränderung der Bilddaten vor und zeigt die Bilddaten dann an. Zur Veränderung der Bilddaten wird die Bildverarbeitungseinheit des Anzeigemoduls eingesetzt. Um die Anzeige der veränderten Bilddaten zu ermöglichen, kann das Anzeigemodul ein Display oder eine andere Anzeigeeinrichtung aufweisen. Alternativ kann das Anzeigemodul kein eigenes Display umfassen, sondern lediglich Schnittstellen (z.B. HDMI) für extern anzuschließende Displays oder andere Anzeigeeinrichtungen aufweisen. Die Veränderung der Bilddaten erfolgt bevorzugt in Echtzeit, so dass praktisch kein Zeitversatz durch die Veränderung erzeugt wird.

Vorteilhafte Ausführungsformen der Erfindung sind der Beschreibung, den Zeichnungen sowie den Unteransprüchen zu entnehmen.

Gemäß einer ersten Ausführungsform umfasst die Veränderung der Bilddaten eine Änderung der Auflösung, eine Änderung des Farbraums, eine Änderung der Bildwiederholrate, eine Farbveränderung und/oder eine Falschfarbendarstellung. Solche Veränderungen der Bilddaten werden am Set oft benötigt, da die Aufnahme der Bilddaten meist mit sogenannten "flachen" Farbprofilen erfolgt, beispielsweise mit Log C. Es kann aber gewünscht sein, durch das Anzeigemodul aber gleich einen Eindruck zu erhalten, wie die Bilddaten später z.B. nach einer Farbveränderung (d.h. nach einem sogenannten "Color Grading") aussehen werden. Auch kann sich ein veränderter Eindruck der Bilddaten durch eine Änderung des Farbraums, eine Änderung der Bildwiederholrate oder eine Falschfarbendarstellung ergeben. Alternativ oder zusätzlich kann z.B. ein Greenscreen-Effekt durch das Anzeigemodul dargestellt werden.

Gemäß einer weiteren Ausführungsform ist die Bildverarbeitungseinheit ausgebildet, zur Änderung des Farbraums und/oder für die Farbveränderung einen Lookup-Table (LUT) auf die Bilddaten anzuwenden. Durch einen solchen LUT können flache nicht saturierte Farben z.B. eines logarithmischen Aufnahmeprofils so dargestellt werden, dass sie einer Anzeige nach dem Color Grading näherkommen. Auf diese Weise kann ein besserer Eindruck der erzeugte Bilddaten erhalten werden. Insbesondere kann die Bildverarbeitungseinheit ausgebildet sein, einen 1D oder 3D LUT auf die von dem Sendemodul erhaltenen Bilddaten anzuwenden. Gemäß einer weiteren Ausführungsform ist das Anzeigemodul ausgebildet, den Bilddaten zumindest einen Teil der Metadaten bei der Anzeige zu überlagern und beispielsweise eine Schärfe- und/oder Belichtungsindikation den Bilddaten zu überlagern. Durch eine solche Überlagerung kann beispielsweise erkannt werden, wo sich scharfe, überbelichtete und/oder unterbelichtete Bereiche befinden. Alternativ oder zusätzlich zu den Metadaten kann das Anzeigemodul auch ausgebildet sein, die vorgenannten Änderungen der Auflösung, Änderungen des Farbraums, Änderungen der Bildwiederholrate, Farbveränderungen und/oder Falschfarbendarstellungen als Überlagerung ("Overlay") darzustellen. Die Überlagerung kann also bevorzugt im Anzeigemodul erzeugt und/oder berechnet. Die Erzeugung und/oder Berechnung erfolgt bevorzugt in Echtzeit, so dass praktisch kein Zeitversatz durch die Überlagerung erzeugt wird.

Gemäß einer weiteren Ausführungsform umfassen die Metadaten Kamerastatusinformationen, Farbrauminformationen, Fokusinformationen, Belichtungsinformationen und/oder Waveforminformationen. Die Kamerastatusinformationen können beispielsweise einen momentanen Betriebsmodus, die Anzeige einer momentanen Aufnahme von Bilddaten, den Ladestand und dergleichen umfassen. Bei den Farbrauminformationen kann es sich um den sogenannten Gamut handeln, also den Teil des Farbraums, welcher in den Bilddaten enthalten sein kann. Die Fokusinformationen können insbesondere einen Fokuspunkt und/oder einen Fokusabstand umfassen. Die Belichtungsinformationen können beispielsweise eine Belichtungsdauer und/oder eine Empfindlichkeit des Bildsensors bei der Aufnahme der Bilddaten (z.B. im ASA/EI/ISO-Format) umfassen. Die Belichtungsinformationen können zudem über- und/oder unterbelichtete Bereiche angeben. Bei den Waveforminformationen kann es sich beispielsweise um ein Histogramm oder unterschiedliche Scopes handeln. Die Scopes können beispielsweise eine Helligkeitsverteilung nach verschiedenen Farben oder Farbkanälen angeben.

Gemäß einer weiteren Ausführungsform kann die Anzeige des Anzeigemoduls kalibriert erfolgen. Das Display oder die sonstige Anzeigeeinheit des Anzeigemoduls können dementsprechend kalibriert sein, um Farben korrekt wiederzugeben. Kalibrierdaten des Anzeigemoduls können bevorzugt in einer Speichereinheit gespeichert sein, die über das Datennetzwerk von dem Anzeigemodul aus zugänglich ist, beispielsweise in einer Cloud, in einem Netzwerkspeicher (Network Attached Storage - NAS), in einem On-Premise-Server und dergleichen. Die Kalibrierdaten können dann auf einfache Weise durch das Anzeigemodul abgerufen werden.

Gemäß einer weiteren Ausführungsform sind das Anzeigemodul und das Sendemodul ausgebildet, bidirektional über das Datennetzwerk miteinander zu kommunizieren. Durch die bidirektionale Kommunikation wird ein Zusammenwirken von Anzeigemodul und Sendemodul möglich. Dies ist beispielsweise bei der SDI-Schnittstelle (Serial Digital Interface) nicht möglich, da dort keine Rückmeldung erfolgt. Beispielsweise kann das Anzeigemodul Bilddaten, Audiodaten und/oder Metadaten bei dem Sendemodul anfordern. Durch die bidirektionale Kommunikation ist es zudem möglich, dass Benutzer nicht mehr z.B. an der Kamera oder dem Sendemodul oder mittels spezieller Fernbedienungsgeräte Konfigurationen für ihren Signalpfad vornehmen müssen. Stattdessen kann nun am Anzeigemodul die Konfiguration der Übertragung der Bilddaten über das Datennetzwerk vorgenommen werden. Durch die bidirektionale Kommunikation kann es auch vorgesehen sein, eine Fernsteuerung des Sendemoduls oder eines das Sendemodul umfassenden Kamerasystems vorzunehmen. Beispielsweise kann die Steuerung eines Fokusassistenzsystems und/oder eines Autofokussystems am Anzeigemodul erfolgen. Weiterhin ist es möglich durch die bidirektionale Kommunikation momentan nicht benötigte Module zu erkennen (z.B. Module, deren Daten momentan von keinem anderen Modul verarbeitet werden) und zur Einsparung von Energie die nicht benötigten Module abzuschalten.

Wie oben bereits ausgeführt, kann das Anzeigemodul ausgebildet sein, die Übertragung der Bilddaten, der Audiodaten und/oder der Metadaten bei dem Sendemodul anzufordern. Nach dem Anfordern kann das Anzeigemodul die Bild-, Audio- und/oder Metadaten aufzeichnen, d.h. speichern. Insbesondere kann das Anzeigemodul die originalen vom Sendemodul empfangenen Bilddaten und/oder die Bilddaten wie dargestellt (z.B. mit Farbveränderung oder dergleichen) aufzeichnen. An dem Anzeigemodul können auch zusätzliche Informationen eingegeben werden, die beispielsweise in der Post-Produktion hilfreich sein können. Auch solche zusätzlichen Informationen können mit aufgezeichnet werden.

Gemäß einer weiteren Ausführungsform ist das Sendemodul eine Kamera oder ein Teil einer Kamera, wobei die Bilddaten durch den Bildsensor der Kamera erfasst wurden. Bevorzugt werden die von der Kamera erfassten Bilddaten direkt nach Aufnahme durch die Kamera mittels des Sendemoduls an das Datennetzwerk übertragen, so dass sich ein Live-Bild auf den Anzeigemodulen ergeben kann. Das Sendemodul kann insbesondere Teil eines Bilderfassungsmoduls und/oder einer Bildverarbeitungseinheit sein. Das Sendemodul kann dementsprechend ausgebildet sein, die Bilddaten nach der Erfassung durch den Bildsensor direkt über das Datennetzwerk auszugeben. Es kann folglich lediglich eine geringe Latenz vorhanden sein. Insbesondere wird keine Zwischenspeicherung von mehr als z.B. 10 Sekunden oder von mehr als z.B. 2 Sekunden vorgenommen. Üblicherweise liegt eine Latenz deutlich unter 1 Sekunde, bevorzugt ist die Latenz kleiner 40 ms, d.h. kleiner als die Zeitdauer eines Frames.

Gemäß einer weiteren Ausführungsform ist das Sendemodul ausgebildet, die Bilddaten mit einer Framerate über das Datennetzwerk zu übertragen, die der Framerate bei der Erfassung durch den Bildsensor oder der Framerate eines Bilderfassungsmoduls entspricht. Die Framerate, die der Bildsensor oder ein den Bildsensor umfassendes Bilderfassungsmodul ausgibt, kann dementsprechend direkt an das Datennetzwerk ausgegeben werden. In der Kamera ist somit z.B. keine rechenaufwendige Umwandlung der Framerate notwendig, da eine solche Umwandlung im Anzeigemodul stattfinden kann. Die Kamera kann dementsprechend kleiner, kompakter und energiesparender ausgebildet sein.

Bei der Kamera handelt es sich insbesondere um eine Kamera für professionelle Filmaufnahmen, insbesondere ausgebildet zur Aufnahme von Bewegtbildern (Videos), Stand- und Einzelbildern und/oder Time Lapse Aufnahmen, wobei die Kamera z.B. ein wechselbares Objektiv aufweisen kann. Die Kamera (oder das Bilderfassungsmodul) kann z.B. zur Aufnahme von Bilddaten mit einer Auflösung von zumindest 4K, 4,5K oder 8K bei Frameraten von 60 FPS, 90 FPS, 100 FPS oder 150 FPS ausgebildet sein.

Gemäß einer weiteren Ausführungsform ist die Kamera eine modulare und insbesondere verteilte elektronische Kamera, wobei die Kamera das Bilderfassungsmodul umfassend den Bildsensor, sowie eine mit dem Bildsensor gekoppelte Bildverarbeitungseinheit aufweist. Die Kamera umfasst ein erstes Funktionsmodul, beispielsweise ein Bedienmodul zur Steuerung und/oder Konfiguration der Kamera. Das Bilderfassungsmodul, das Funktionsmodul und das Anzeigemodul (welches auch ein zweites Funktionsmodul sein kann) sind Kameramodule, wobei das Bilderfassungsmodul, das Bedienmodul und das Anzeigemodul mittels des Datennetzwerks miteinander verbunden sind, wobei das Datennetzwerk eine Verteileinheit aufweist, welche ausgebildet ist, Daten über das Datennetzwerk von den Kameramodulen zu empfangen und Daten von einem der Kameramodule zu zumindest einem der anderen Kameramodule weiterzuleiten.

Die Bildverarbeitungseinheit überführt die Kamera bevorzugt in ein digitales Format, das über das Datennetzwerk verschickt werden kann. Die Kamerabilder können als Einzelbilder und/oder als Video vorliegen. Beispielsweise können die Kamerabilder als Stream über das Datennetzwerk übertragen werden.

Ein Funktionsmodul dient insbesondere dazu, jeweils einen Teil der Funktionen der Kamera zur Verfügung zu stellen. Ein Funktionsmodul kann eines der hierin genannten Kameramodule sein.

Das Bedienmodul kann ein Human-Machine-Interface (HMI) aufweisen, beispielsweise in der Form eines Touchscreens oder einer Anordnung von Schaltern und/oder eines Displays. Das Bedienmodul kann beispielsweise dazu dienen, die Aufnahme von Kamerabildern zu starten und/oder zu stoppen, eine Framerate bei der Aufnahme von Kamerabildern, eine Farbtiefe und dergleichen einzustellen.

Wie erwähnt, kann es sich bei der Kamera um eine modulare Kamera handeln, bei welcher die einzelnen Kameramodule mittels des Datennetzwerks gekoppelt sind. Durch die Kopplung des Anzeigemoduls an dasselbe Datennetzwerk kann der Aufwand für das Monitoring reduziert werden. Zudem besteht die Möglichkeit, dass auch andere Kameramodule die von dem Sendemodul in das Datennetzwerk übertragenen Bilddaten, Audiodaten und/oder Metadaten empfangen und verwenden. Wie erwähnt, kann das Sendemodul beispielsweise Teil des Bilderfassungsmoduls sein.

Die Verteileinheit umfasst bevorzugt einen Netzwerk-Switch, einen Hub, einen Router und/oder ein Gateway. Die Verteileinheit kann auch eine der genannten Netzwerk-Komponenten sein. Bevorzugt weist die Verteileinheit Netzwerk-Ports auf, an die jeweils ein Kameramodul angeschlossen werden kann. Die Ports können unterschiedliche Übertragungsgeschwindigkeiten unterstützen, beispielsweise 10 Mbit, 100 Mbit, 1 Gbit, 10 Gbit, 100 Gbit oder 400 Gbit.

Ist die Verteileinheit ein Hub, werden alle von den Kameramodulen bei der Verteileinheit eingehenden Daten an alle anderen Kameramodule weitergeleitet. Bei einem Switch, Router und/oder Gateway können die eingehenden Daten zielgerichtet an bestimmte Kameramodule weitergeleitet werden. Hierzu enthält die Verteileinheit dann Informationen, welches Kameramodul an welchem Netzwerk-Port angeschlossen ist. Durch die Verwendung beispielsweise eines Switches besteht somit der Vorteil, dass nur für ein jeweiliges Kameramodul bestimmte Daten an dieses Kameramodul von der Verteileinheit weitergeleitet werden. Die vorhandene Übertragungsbandbreite des Datennetzwerks wird folglich nicht unnötig ausgeschöpft.

Gemäß einer weiteren Ausführungsform ist die Verteileinheit kaskadiert und/oder aus Teileinheiten aufgebaut. Die Verteileinheit kann zum Beispiel "gestacked" sein oder Untereinheiten ("kaskadiert") aufweisen. Es ist lediglich relevant, dass die Komponenten der Verteileinheit miteinander kommunizieren können, so dass eine Kommunikation der Kameramodule untereinander über das Datennetzwerk möglich ist. Alternativ besteht die Möglichkeit, dass die Verteileinheit nur genau eine Komponente aufweist, beispielsweise nur einen Switch.

Bei verteilten und/oder kaskadierten Verteileinheiten ist es auch möglich, dass zumindest ein Teil der Kameramodule jeweils einen Teil der Verteileinheit umfasst. Beispielsweise kann ein Teil der Kameramodule jeweils einen eigenen Switch aufweisen, so dass mehrere solcher Kameramodule in einer Kette mittels Netzwerckabeln verbunden werden können. Dabei kann jedes Kameramodul beispielsweise zumindest zwei Netzwerkbuchsen aufweisen.

Gemäß einer weiteren Ausführungsform überträgt zumindest eines der Kameramodule, insbesondere nach dem Anschließen an das Datennetzwerk, ein Geräteprofil über das Datennetzwerk, wobei das Geräteprofil eine Geräteklasse des Kameramoduls sowie Informationen zum Funktionsumfang des Kameramoduls umfasst. Die Kamera passt ihre Betriebsparameter anhand des übertragenen Geräteprofils oder der übertragenen Geräteprofile an, um das übertragende Kameramodul in den Betrieb der Kamera einzubinden. Anders ausgedrückt wertet die Kamera also die Geräteprofile der angeschlossenen Kameramodule aus, um z.B. den Betrieb der Kamera an die angeschlossenen Kameramodule anzupassen und gegebenenfalls auf die Kameramodule zu optimieren.

Die Kamera kann zu diesem Zweck eine Steuereinheit aufweisen, die die Geräteprofile des Kameramoduls oder der Kameramodule auswertet. Die Steuereinheit kann die hierin beschriebenen Schritte jeweils durchführen und/oder anstoßen. Insbesondere kann ein Kameramodul oder die Verteileinheit die Funktionen der Steuereinheit ausführen.

Die Geräteprofile ermöglichen es, durch eine Kapselung und/oder Beschreibung der Funktionalitäten der Kameramodule mittels der Geräteprofile ein standardisiertes Datenformat zu schaffen, wodurch ein einheitliches Format zum Austausch von Fähigkeiten und Einschränkungen zwischen der Kamera und den Kameramodulen geschaffen wird. Insbesondere teilen die Kameramodule mit dem Geräteprofil jeweils ihre Anforderungen und auch Informationen zu ihrem Funktionsumfang der Kamera mit.

Durch die Übertragung der Geräteprofile kann die Kamera dann auf nahezu beliebige und auch neue Kameramodule sinnvoll reagieren, ohne dass eine Änderung der Firm- und/oder Software der Kamera benötigt wird. Der Entwicklungsaufwand zur Integration von neuem und/oder anderem Zubehör (d.h. von Kameramodulen) kann somit deutlich gesenkt werden.

Durch das Anschließen und das Einbinden in den Betrieb der Kamera, wird das jeweilige Kameramodul selbst Teil der Kamera. Insbesondere kann das Kameramodul die Kamera erst vollständig funktionsfähig machen, beispielsweise wenn es sich bei dem Kameramodul um ein Objektiv oder ein Bilderfassungsmodul handelt.

Nach dem Anschließen der Kameramodule über das Datennetzwerk kann auch ein Austausch der Geräteprofile stattfinden. Dies bedeutet, dass auch das neu angeschlossene Kameramodul von bereits in der Kamera vorhandenen Kameramodulen die Geräteprofile über das Datennetzwerk erhält. Bevorzugt kann dann das neu angeschlossene Kameramodul auch seinen Betrieb an die bereits vorhandenen Kameramodule anpassen.

Zum Einbinden neu angeschlossenen Kameramoduls in den Betrieb der Kamera verändert die Kamera ihre Betriebsparameter. Die Betriebsparameter können beispielsweise das Datenformat und/oder das Protokoll festlegen, mittels welchem über die Datenschnittstelle mit dem neu angeschlossenen Kameramodul kommuniziert wird. Die Betriebsparameter können aber auch beispielsweise eine Framerate und/oder oder eine Auflösung der von der Kamera erfassten Kamerabilder umfassen. Wird beispielsweise als neues Kameramodul ein Speichermodul an die Kamera angeschlossen, welches maximal eine Auflösung von 4K bei einer Framerate von 60 FPS unterstützt, so können die Betriebsparameter dahingehend eingestellt werden, dass Kamerabilder mit einer Auflösung von 4K und einer Framerate von 60 FPS erzeugt und/oder zumindest in diesem Format an das Speichermodul übertragen werden. Grundsätzlich sind unter den Betriebsparametern sämtliche Einstellungen der Kamera zu verstehen, die Auswirkungen auf den Betrieb der Kamera besitzen können.

Die Geräteklasse kann beispielsweise angeben, ob es sich bei dem Kameramodul um ein Bilderfassungsmodul, ein Speichermodul oder ein Wiedergabemodul handelt. Die Informationen zum Funktionsumfang können für das Bilderfassungsmodul z.B. die maximale Auflösung, Framerate, Farbtiefe, und dergleichen angeben. Für das Speichermodul können z.B. die Speicherkapazität und für das Wiedergabemodul die abspielbaren Dateiformate angegeben sein.

Durch die in dem Geräteprofil enthaltene Geräteklasse kann die Kamera als Rückfallposition ihre Betriebsparameter z.B. an ein, insbesondere vordefiniertes, Standardgerät dieser Geräteklasse anpassen. Auf diese Weise können auch neu entwickelte Kameramodule in den Betrieb der Kamera eingebunden werden, selbst wenn die neu entwickelten Kameramodule Funktionen aufweisen, die von der Kamera nicht unterstützt werden. In diesem Fall können zumindest Basisfunktionen (z.B. die Funktionen des Standardgeräts) trotzdem nutzbar sein. Zum Beispiel kann ein neuartiges Entfernungsmesssystem, welches mehrere Messpunkte aufweist, trotzdem an einer existierenden Kamera verwendet werden, da es als der Geräteklasse Entfernungsmesssystem zugehörig erkannt wird und z.B. auch einen Wert liefert, der einem existierenden Ein-Punkt Entfernungsmessgerät entspricht. Auf diese Weise kann ein Softwareupdate für Bestandsgeräte bei der Markteinführung neuer Kameramodule vermieden werden.

Gemäß einer weiteren Ausführungsform ist das Sendemodul ausgebildet, die Bilddaten, insbesondere lediglich, zu skalieren und/oder zu komprimieren. Das Skalieren und/oder Komprimieren der Bilddaten ist üblicherweise mit geringem Rechenaufwand möglich. Ein Color Grading würde beispielsweise deutlich mehr Rechenaufwand erfordern. Durch die Skalierung und/oder Komprimierung der Bilddaten kann eine Überlastung des Datennetzwerks verhindert werden. Insbesondere kann in dem Sendemodul oder in der Kamera nur eine Skalierung und/oder Komprimierung stattfinden. Sämtliche weiteren Bildverarbeitungsschritte vor der Anzeige der Bilddaten auf dem Anzeigemodul erfolgen bevorzugt in dem Anzeigemodul. Bevorzugt erfolgt beispielsweise keine Farbänderung oder keine Änderung der Framerate in dem Bilderfassungsmodul und/oder in dem Sendemodul.

Gemäß einer weiteren Ausführungsform ist das Sendemodul ausgebildet, die Skalierung und/oder Komprimierung der Bilddaten basierend auf den Einstellungen der Anzeige der Bilddaten auf dem Anzeigemodul vorzunehmen. Dies bedeutet, dass das Sendemodul ausgebildet sein kann, von dem über das Datennetzwerk angeschlossenen Anzeigemodul Informationen zu erhalten, wie die Bilddaten von dem Anzeigemodul angezeigt werden (z.B. mit welcher Auflösung oder in welcher Qualität). Basierend auf diesen Informationen kann dann die Skalierung und/oder Komprimierung der Bilddaten entsprechend vorgenommen werden, um die im Datennetzwerk durch die Bilddaten benötigte Übertragungsbandbreite zu minimieren. Wenn das Anzeigemodul beispielsweise ein Sucher ist und nur eine geringe Auflösung zeigt, kann das Sendemodul eine stärkere Skalierung vornehmen. Sind mehrere Anzeigemodule über das Datennetzwerk mit dem Sendemodul verbunden, so kann das Sendemodul die Skalierung und/oder Komprimierung so wählen, dass auch das Anzeigemodul, welches die Bilddaten mit der besten Qualität und/oder Auflösung anzeigt, passende Bilddaten erhält.

Insbesondere kann auch ein Anzeigemodul bei dem Sendemodul Bilddaten z.B. mit einer Ausschnittsvergrößerung anfordern, z.B. gemäß einem sog. "pixel by pixel Zoom". Die Bilddaten mit der Ausschnittsvergrößerung können auch als zusätzliche Bilddaten (neben Bilddaten ohne Vergrößerung) übertragen werden.

Gemäß einer weiteren Ausführungsform ist das Sendemodul ausgebildet, die Bilddaten, die Audiodaten und/oder die Metadaten in separaten Datenströmen über das Datennetzwerk zu übertragen, bevorzugt in synchronisierten Datenpaketen. Durch die Übertragung in separaten Datenströmen ergibt sich eine erhöhte Flexibilität. Wenn das Anzeigemodul beispielsweise keinen Ton wiedergibt, muss der Datenstrom mit Audiodaten nicht verarbeitet werden. Alternativ ist es aber auch möglich, die Bild-, Audio-, und/oder Metadaten im selben Datenstrom und/oder gemeinsamen Datenpaketen über das Datennetzwerk zu übertragen.

Gemäß einer weiteren Ausführungsform weisen die Bilddaten einen Farbraum auf, welcher größer als der Farbraum von Rec.709 ist. Die Bilddaten weisen also einen großen Farbraum auf. Ein solcher großer Farbraum ist notwendig, damit verschiedene Darstellungsprofile und Farbveränderungen überhaupt erst möglich werden. Beispielsweise können die Bilddaten den Farbraum P3 oder Rec.2020 aufweisen. In Verbindung mit einer Aufnahme in Log C kann hier auch von "Alexa Wide Gamut" gesprochen werden.

Gemäß einer weiteren Ausführungsform umfasst das Monitoringsystem ein oder mehrere weitere Anzeigemodule, welche über das Datennetzwerk mit dem Sendemodul verbunden sind, wobei die weiteren Anzeigemodule ausgebildet sind, die Bilddaten und die Metadaten, insbesondere wahlweise, anzuzeigen. Die weiteren Anzeigemodule weisen jeweils eine eigene und/oder separate Bildverarbeitungseinheit auf, welche jeweils ausgebildet ist, eine Veränderung der Bilddaten vorzunehmen, bevor die Bilddaten angezeigt werden. Die weiteren Anzeigemodule weisen insbesondere die gleichen Eigenschaften auf, wie das vorstehend beschriebene (erste) Anzeigemodul. Mit unterschiedlichen Anzeigemodulen kann eine unterschiedliche Veränderung der Bilddaten vorgenommen werden, je nachdem, ob es sich bei dem Anzeigemodul z.B. um einen Sucher oder um ein anderes Monitoring-Gerät handelt.

Bei den Anzeigemodulen kann es sich bevorzugt um dedizierte Hardware handeln, zum Beispiel um ein Display mit Touchfunktion oder ein Display, welches mit einer, z.B. kabelgebundenen, Handeinheit steuerbar ist. Alternativ kann das Anzeigemodul auch in Software, z.B. auf einem Server, einem Personal Computer oder einem Mobilgerät, abgebildet sein. Die Berechnungen der Bildverarbeitungseinheit können dann auf dem Server, dem Personal Computer oder dem Mobilgerät vorgenommen werden.

Das Anzeigemodul oder die Anzeigemodule können beispielsweise direkt an Anschlüsse des Datennetzwerks angeschlossen werden, die in oder an dem Sendemodul vorgesehen sind. Alternativ oder zusätzlich ist zwischen dem Sendemodul und dem Anzeigemodul in dem Datennetzwerk zumindest eine Netzwerkkomponente zum Verteilen der Bild-, Audio- und/oder Metadaten zwischengeschaltet, wobei die Netzwerkkomponente bevorzugt eine Netzwerk-Switch, einen Hub, einen Router und/oder ein Gateway umfasst. Bei der Netzwerkkomponente zum Verteilen der Bild-, Audio- und/oder Metadaten kann es sich insbesondere die vorgenannte Verteileinheit der modularen Kamera handeln. Alternativ kann die Netzwerkkomponente zum Verteilen auch eine zusätzliche Netzwerkkomponente sein. Die Netzwerkkomponente verteilt z.B. einen Datenstrom der Bilddaten und ermöglicht so einen einfachen Anschluss von weiteren Anzeigemodulen. Insbesondere kann das Sendemodul einen Multicast und/oder einen Broadcast verwenden, um die Bilddaten an alle Anzeigemodule gleichzeitig auszuspielen. Auf diese Weise muss nicht für jedes Anzeigemodul ein separater Datenstrom erzeugt werden.

Gemäß einer weiteren Ausführungsform sind die Anzeigemodule ausgebildet, die Bilddaten synchronisiert anzuzeigen. Die Bilddaten auf den verschiedenen Anzeigemodulen können also derart dargestellt werden, dass jeweils derselbe Time Code dargestellt wird. In diesem Zusammenhang können die Anzeigemodule ausgebildet sein, jeweils dieselbe Verarbeitungslatenz für die Veränderung der Bilddaten aufzuweisen. Insbesondere kann künstlich durch die Bildverarbeitungseinheiten eine zusätzliche Verarbeitungslatenz eingefügt werden, so dass sämtliche Anzeigemodule die gleiche Verarbeitungslatenz besitzen.

Um eine Verzögerung der Bilddaten in dem Datennetzwerk zu vermeiden, können die Bilddaten (z.B. durch Skalierung und/oder Kompression) so ausgebildet sein, dass die Bilddaten nur einen vorbestimmten Teil, insbesondere nur 60%, nur 50%, nur 40% oder nur 30%, der Übertragungskapazität des Datennetzwerks belegen. Wird die Übertragungskapazität des Datennetzwerks nicht ausgeschöpft, so ergeben sich geringe Kollisionen, wodurch die Laufzeiten zu verschiedenen Anzeigemodulen nahezu gleich sind. Auf diese Weise können die Bilddaten synchronisiert auf den Anzeigemodulen angezeigt werden.

Überdies können die Anzeigemodule und/oder das Sendemodul zeitsynchronisiert sein, insbesondere mittels des Precision-Time-Protocols (PTP) oder durch Time-Sensitive-Networking (TSN). Durch die Synchronisation mittels PTP kann eine Synchronisation mit einer Genauigkeit im Bereich von Mikrosekunden, bei Ausführung mittels Hardware sogar eine Genauigkeit im Bereich von Nanosekunden erzielt werden. Beim Einsatz von PTP werden die Verzögerungen bei der Übertragung über das Datennetzwerk bestimmt, so dass eine interne Zeitbasis der Anzeigemodule und/oder des Sendemoduls aneinander angepasst werden kann. Auch auf diese Weise können die Bilddaten synchronisiert auf den Anzeigemodulen angezeigt werden.

Überdies kann beim Einsatz eines echtzeitfähigen Feldbusses die Zeit-Synchronisation dem Datennetzwerk und damit den Anzeigemodulen inhärent sein.

Gemäß einer weiteren Ausführungsform umfasst das Datennetzwerk ein Ether-Netzwerk, ein Feldbus-Netzwerk oder ein Non-IP-Netzwerk (NIN). Alternativ ist das Datennetzwerk eines der vorgenannten Netzwerke.

Ethernet definiert beispielsweise kabelgebundene Datennetzwerke, mit Übertragungsraten zwischen 1 Mbit und 400 Gbit. Bei einem Ethernet-Netzwerk sind sowohl die physische Schicht (OSI Layer 1) als auch die Data-Link-Schicht (OSI Layer 2) vorgegeben. Das Datennetzwerk kann zumindest abschnittsweise auch durch ein WLAN (Wireless Local Area Network) gebildet werden. In diesem Fall können ein oder mehrere Kameramodule und/oder die Verteileinheit einen WLAN-Transceiver umfassen, so dass Kameramodule auch mittels WLAN in das Datennetzwerk eingebunden werden können.

Ein Feldbus-Netzwerk kann beispielsweise eine Echtzeitfähigkeit bereitstellen. Das Feldbus-Netzwerk kann alternativ oder zusätzlich Ethernet-basiert sein. Bei dem Feldbus-Netzwerk kann es sich z.B. um EtherCAT, EIP, Sercos III und dergleichen handeln. Bei dem Non-IP-Netzwerk (NIN) kann es sich insbesondere um ein nicht-paketbasiertes sondern um ein Stream-basiertes Netzwerk handeln. Gemäß einer weiteren Ausführungsform ist die Verteileinheit ausgebildet, mit den Kameramodulen und insbesondere mit dem Anzeigemodul und dem Sendemodul über das Datennetzwerk mittels desselben Protokolls zu kommunizieren. Es ist auch der Einsatz mehrerer Protokolle möglich, die für die Kommunikation mit den Kameramodulen zur Verfügung stehen, wobei jeweils ein passendes Protokoll ausgewählt wird, welches bevorzugt das sendende und das empfangende Kameramodul beherrschen. Vorteilhafterweise ist somit keine Protokollumwandlung notwendig. Dasselbe und/oder dieselben Protokolle können Protokolle aus den OSI-Schichten 3, 4, 5, 6 und/oder 7 sein. Beispielsweise kann als Transportprotokoll TCP (Transmission Control Protocol) und/oder UDP (User Datagramm Protokoll) verwendet werden. Zudem kann RTP (Real-Time Transport Protocol) zum Einsatz kommen, insbesondere für echtzeitkritische Daten.

Gemäß einer weiteren Ausführungsform sind das Sendemodul und/oder die Anzeigemodule als eigenständige Netzwerkkomponenten ausgebildet. Dies bedeutet, das Sendemodul und/oder das Anzeigemodul sind in der Lage, eigenständig über das Datennetzwerk zu kommunizieren. Das Sendemodul und/oder das Anzeigemodul kann hardwaremäßig für die Kommunikation über das Datennetzwerk ausgebildet sein und dementsprechend eine passende physikalische Schnittstelle (PHY-Schnittstelle) umfassen. Auch kann in dem Sendemodul und/oder dem Anzeigemodul ein zur Kommunikation über das Datennetzwerk benötigter Protokoll-Stack implementiert sein.

Gemäß einer weiteren Ausführungsform weist das Anzeigemodul eine oder mehrere Schnittstellen zum Anschließen eines Monitors oder einer anderen Anzeigeeinheit auf, wobei die Schnittstellen insbesondere einen Displayport (DP), ein Serial-Digital-Interface (SDI), ein Mobile Industry Processor Interface (MIPI) und/oder einen High-Definition-Multimedia-Interface-(HDMI-)Anschluss umfassen. Das Anzeigemodul kann dementsprechend als Interface-Box agieren, um handelsübliche Monitore oder Anzeigeeinheiten anzuschließen.

Weiterer Gegenstand der Erfindung ist ein Anzeigemodul, umfassend eine Netzwerkschnittstelle, welche ausgebildet ist, über ein Datennetzwerk Bilddaten, insbesondere Audiodaten, und Metadaten zu empfangen und eine Anzeige der Bilddaten und der Metadaten zu ermöglichen, wobei das Anzeigemodul eine Bildverarbeitungseinheit aufweist, welche ausgebildet ist, eine Veränderung der Bilddaten vorzunehmen, bevor die Bilddaten angezeigt werden.

Schließlich umfasst die Erfindung ein Verfahren zum Monitoring bei Filmaufnahmen, bei welchem ein Sendemodul und ein Anzeigemodul über ein Datennetzwerk miteinander verbunden werden, wobei das Sendemodul Bilddaten und bevorzugt auch Audiodaten über das Datennetzwerk an das Anzeigemodul überträgt, wobei das Sendemodul zusätzlich Metadaten an das Anzeigemodul überträgt, wobei das Anzeigemodul eine Anzeige der Bilddaten und der Metadaten, insbesondere wahlweise, ermöglicht und das Anzeigemodul eine Veränderung der Bilddaten vornimmt, bevor die Bilddaten angezeigt werden.

Für das erfindungsgemäße Anzeigemodul und das erfindungsgemäße Verfahren gelten die Ausführungen zum erfindungsgemäßen Monitoring-System entsprechend. Dies gilt insbesondere hinsichtlich Vorteilen und Ausführungsformen. Es versteht sich, dass sämtliche hierin genannten Ausführungsformen miteinander kombinierbar sind, sofern nicht explizit etwas Gegenteiliges angegeben ist.

Nachfolgend wird die Erfindung rein beispielhaft unter Bezugnahme auf die Zeichnungen beschrieben. Dabei wird zunächst allgemein die modulare Kamera beschrieben. Anschließend wird auf die Geräteprofile und auf die Möglichkeit des Monitorings auf verschiedenen Anzeigemodulen eingegangen.

Es zeigen:
- Fig. 1: schematisch eine modulare elektronische Kamera mit einer Verteileinheit;
- Fig. 2: schematisch die räumliche Anordnung der Kameramodule der elektronischen Kamera von Fig. 1;
- Fig. 3: eine schematische Ansicht von an ein Datennetzwerk angeschlossenen Kameramodulen gemäß einer ersten Ausführungsform;
- Fig. 4: schematisch eine Ansicht von an ein Datennetzwerk angeschlossenen Kameramodulen gemäß einer zweiten Ausführungsform;
- Fig. 5: die Kopplung zweier Kameras über ein Datennetzwerk;
- Fig. 6: schematisch die Aufteilung von Geräteprofilen in Geräteklasse und Informationen zum Funktionsumfang; und
- Fig. 7: schematisch über ein Datennetzwerk gekoppelte Anzeigemodule, welche Bilddaten von einem Sendemodul erhalten.

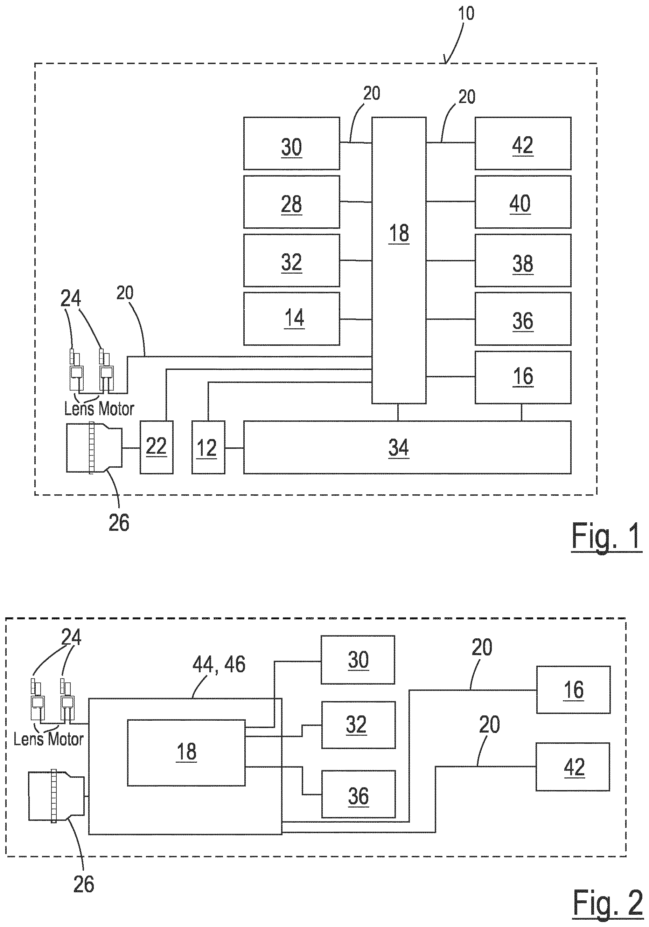

Fig. 1 zeigt eine Kamera 10 mit einem Bilderfassungsmodul 12, welches einen Bildsensor und eine Bildverarbeitungseinheit aufweist. Die Kamera 10 umfasst ferner ein Bedienmodul 14, welches zur Steuerung und/oder Konfiguration der Kamera 10 dient.

Die Kamera 10 umfasst weiterhin ein Anzeigemodul 16, z.B. einen Sucher, welches vom Bildsensor erfasste Kamerabilder darstellt.

Das Bilderfassungsmodul 12, das Bedienmodul 14 und das Anzeigemodul 16 sind Kameramodule und sind jeweils mit einer als Switch 18 ausgebildeten Verteileinheit über Ethernet-Verbindungen 20 gekoppelt. Das Bedienmodul 14 und das Anzeigemodul 16 können auch als erstes und zweites Funktionsmodul bezeichnet werden.

Die Kamera 10 umfasst noch weitere Kameramodule, nämlich ein Objektivaufnahmemodul 22, wobei das Objektivaufnahmemodul 22 in mehrere Teilmodule gegliedert ist und Motoren 24 zur Verstellung eines Objektivs 26 und eine Motorsteuerung 28 zur Steuerung der Motoren 24 aufweist. Die Motoren 24, das Objektiv 26 und die Motorsteuerung 28 könnten alternativ auch als separate Kameramodule angesehen werden.

Weitere Kameramodule der Kamera 10 sind ein Kamera-Positionierungsmodul 30, ein Audiomodul 32, ein Prozessormodul 34, ein Konvertierungsmodul 36, ein Funkmodul 38 und ein Anschlussmodul 40. Schließlich kann die Kamera 10 noch ein zweites Anzeigemodul 42 aufweisen.

Sämtliche der Kameramodule 12, 14, 16, 22, 30, 32, 34, 36, 38, 40, 42 sind über Ethernet-Verbindungen 20 mit dem Switch 18 gekoppelt. Die Ethernet-Verbindungen 20 können als Kupferkabel oder auch als Lichtwellenleiter ausgebildet sein.

Der Switch 18 empfängt von den Kameramodulen jeweils Daten und leitet die Daten zu einem oder mehreren anderen Kameramodulen weiter. Die Kameramodule verwenden dabei das gleiche Datennetzwerk, nämlich ein aus dem Switch 18 und den Ethernet-Verbindungen 20 aufgebautes Datennetzwerk, welches Daten zwischen den Kameramodulen überträgt. Das Datennetzwerk dient als Datenschnittstelle zwischen den Kameramodulen. Durch einfaches Anschließen an das Datennetzwerk können somit andere und/oder zusätzliche Kameramodule in die Kamera 10 integriert werden.

Fig. 2 zeigt die räumliche Anordnung der Kameramodule der Kamera 10 von Fig. 1. Wie in Fig. 2 gezeigt, umfasst die Kamera 10 eine Zentraleinheit 44, die ein eigenes Gehäuse 46 aufweist. In der Zentraleinheit 44 sind der Switch 18 und sämtliche nicht außerhalb der Zentraleinheit 44 gezeigten Kameramodule angeordnet. Außerhalb des Gehäuses 46 der Zentraleinheit 44 ist das Kamerapositionierungsmodul 30, das Audiomodul 32 und das Konvertierungsmodul 36 angeordnet. Diese Module können mechanisch an dem Gehäuse 46 der Zentraleinheit 44 angebracht sein. Demgegenüber sind das Anzeigemodul 16 und das zweite Anzeigemodul 42 beabstandet und außerhalb des Gehäuses 46 angebracht und insbesondere nur über die Ethernet-Verbindungen 20 mit der Zentraleinheit 44 und damit mit dem Switch 18 verbunden. Durch die Auslagerung von Kameramodulen kann der üblicherweise zu bewegende Teil der Kamera 10 kleiner und handlicher gestaltet werden.

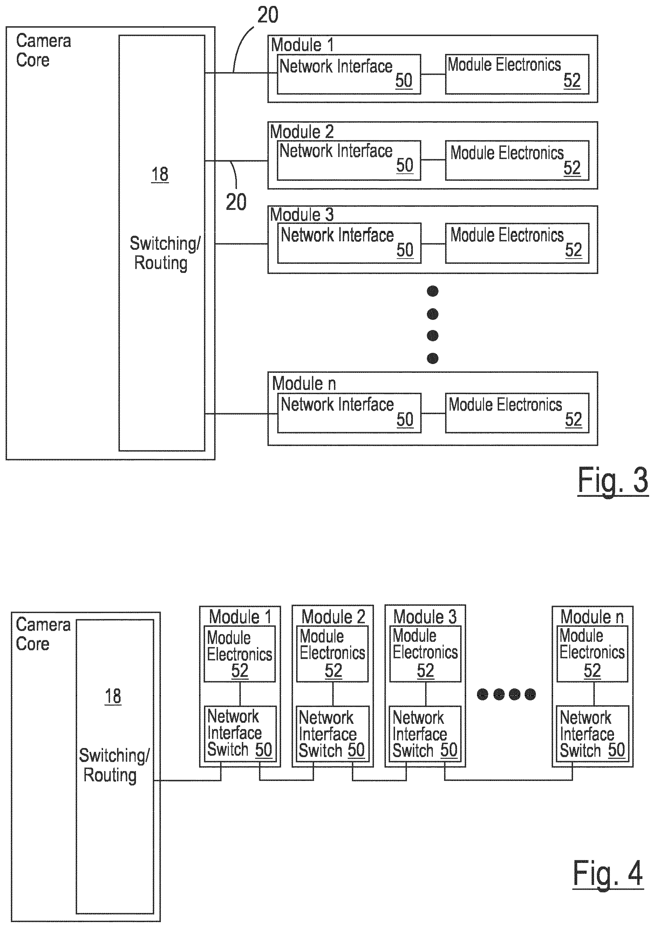

Fig. 3 und Fig. 4 zeigen zwei unterschiedliche Ausführungsformen der Ausbildung des Datennetzwerks. Insbesondere ab Fig. 3 und Fig. 4 werden Kameramodule allgemein mit dem Bezugszeichen 48 dargestellt. Gemäß der ersten Ausführungsform von Fig. 3 verfügen die Kameramodule 48 jeweils über eine eigene Netzwerkschnittstelle 50, d.h. über eigene Hardware zum Anschluss einer Ethernet-Verbindung 20. Die Kameramodule 48 umfassen zudem jeweils eine Modulelektronik 52, die die Kommunikation über die Ethernet-Verbindung 20 steuert und z.B. einen Protokoll-Stack umfasst. Gemäß der Ausführungsform von Fig. 3 sind die Kameramodule 48 jeweils direkt über eine Ethernet-Verbindung 20 mit dem Switch 18 verbunden. Demgegenüber umfassen die Kameramodule 48 gemäß der zweiten Ausführungsform von Fig. 4 in ihrer Netzwerkschnittstelle 50 jeweils die Funktionalität eines Hubs oder Switches und können dementsprechend, wie in Fig. 4 gezeigt, in Form einer Kette verbunden werden. Bei der Ausführungsform von Fig. 4 ist nur ein Kameramodul 48 direkt über eine Ethernet-Verbindung 20 mit dem Switch 18 verbunden. Dieses direkt verbundene Kameramodul 48 umfasst eine weitere Ethernet-Verbindung 20, die das nächste Kameramodul 48 anschließt. Die Daten der nächsten Kameramodule 48 laufen somit zunächst über das direkt mit dem Switch 18 verbundene Kameramodul 48 und werden dann, sofern notwendig, an den Switch 18 weitergeleitet.

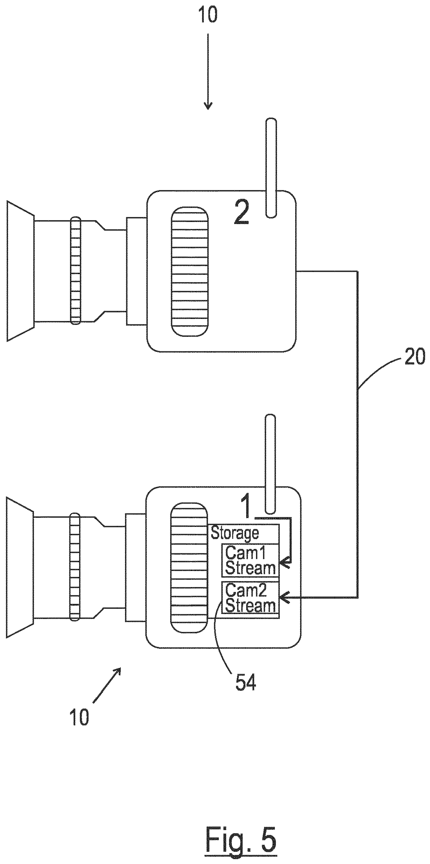

Fig. 5 zeigt die Verbindung zweier Kameras 10 über eine Ethernet-Verbindung 20. Durch die Ethernet-Verbindung 20 zwischen den beiden Kameras 10 können die Datennetzwerke der Kameras 10 zusammengeschlossen werden, so dass die Kameramodule 48 der einen Kamera 10 auf die Kameramodule 48 der anderen Kamera 10 zugreifen können. Beispielsweise kann die in Fig. 5 unten gezeigte Kamera 10 ein Speichermodul 54 aufweisen, das von beiden Kameras 10 zur Speicherung der erzeugten Bilddaten genutzt wird.

Es ist ersichtlich, dass durch die modulare Gestaltung der Kamera 10 mittels der Kameramodule 48 eine große Flexibilität im Aufbau der Kamera 10 erreicht werden kann. Zudem kann die Kamera 10 für den Betrieb klein und leicht gehalten werden, so dass sich am Filmset Vorteile ergeben. Das Datennetzwerk kann zudem auf einfache Weise mit weiteren Kameras gekoppelt werden, um eine Auslagerung von Funktionalitäten von einer auf eine andere Kamera 10 zu ermöglichen, eine Synchronisation von Kameras 10 für 3D-Aufnahmen zu gestatten oder die Steuerung mehrerer Kameras 10 von einem zentralen Punkt aus zu ermöglichen.

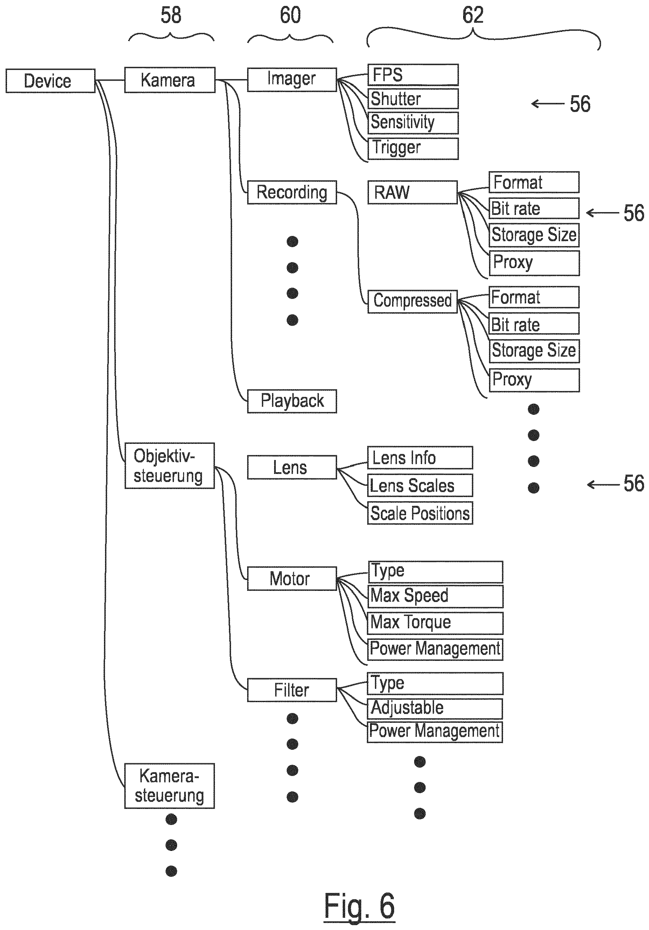

In Fig. 6 sind Geräteprofile von Kameramodulen 48 schematisch dargestellt. Die Geräteprofile 56 umfassen jeweils eine Geräteklasse 58, also beispielsweise "Kamera", "Objektivsteuerung" oder "Kamerasteuerung". Die Geräteklassen 58 umfassen jeweils noch Sub-Klassen 60, die die Geräteklasse genauer definieren. Zu jeder Geräteklasse 58 und/oder zu jeder Sub-Klasse 60 sind Informationen zum Funktionsumfang 62 angegeben, die beispielsweise die Fähigkeiten einer Kamera wiedergeben, z.B. ob die Kamera ein RAW-Format oder ein komprimiertes Format beherrscht.

Wird nun beispielhaft für die in Fig. 2 gezeigte Kamera 10 davon ausgegangen, dass das Kamera-Positionierungsmodul 30 und das Audiomodul 32 an die Kamera 10 angeschlossen werden, so wird für das Kamera-Positionierungsmodul 30 und das Audiomodul 32 zunächst mittels der Ethernet-Verbindung 20 eine Verbindung mit dem Datennetzwerk bzw. der Datenschnittstelle der Kamera 10 hergestellt. Eine (nicht gezeigte) Steuereinheit der Kamera 10, die beispielsweise in der Zentraleinheit 44 angeordnet ist oder die Bestandteil des Prozessormoduls 34 sein kann, bewirkt nach der Herstellung der Verbindung die Übertragung der Geräteprofile 56 vom Kamera-Positionierungsmodul 30 und vom Audiomodul 32 an die Kamera 10. Die Übertragung der Geräteprofile kann beispielsweise in Form einer XML- und/oder JSON-Datei erfolgen.

Nach dem Empfang der Geräteprofile 56 werden die Geräteprofile ausgewertet und Betriebsparameter der Kamera 10 basierend auf den Geräteprofilen 56 angepasst. So kann beispielsweise eine Übermittlung von Audiosignalen zum Audiomodul 32 aktiviert werden. Überdies können beispielsweise die von dem Kamera-Positionierungsmodul 30 ausgegebenen Positionsinformationen an das Prozessormodul 34 weitergeleitet werden. Um solche Datenverbindungen einzurichten, werden die Betriebsparameter der Kamera 10 entsprechend geändert.

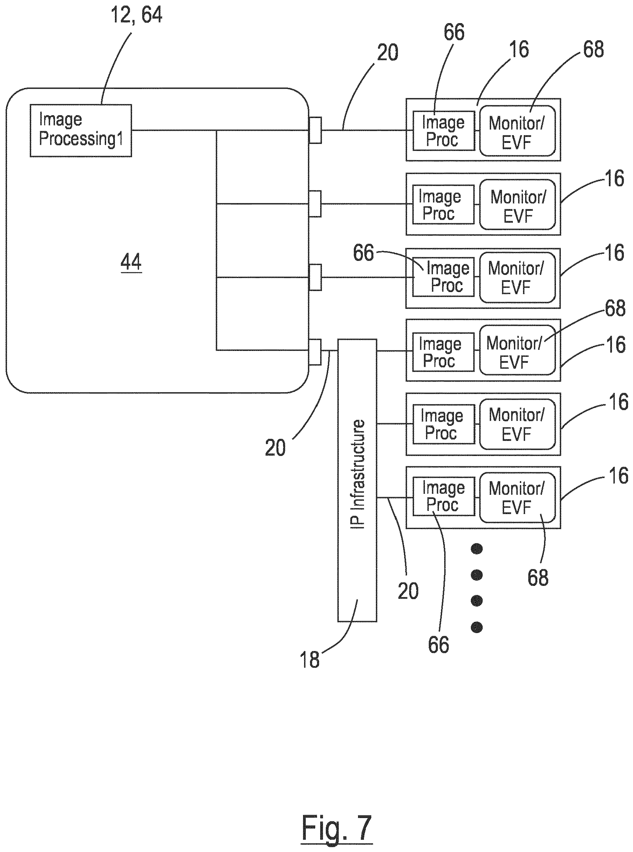

Schließlich wird in Fig. 7 noch die Anzeige unterschiedlicher Varianten von Kamerabildern dargestellt. Fig. 7 zeigt ein Sendemodul 64, welches Teil des Bilderfassungsmoduls 12 ist. Das Sendemodul 64 ist über das Datennetzwerk, d.h. über Ethernet-Verbindungen 20 mit einer Vielzahl von Anzeigemodulen 16 verbunden. Ein Teil der Anzeigemodule 16 ist direkt an der Zentraleinheit 44 angeschlossen. Ein anderer Teil der Anzeigemodule 16 ist über einen weiteren Switch 18 mit dem Sendemodul 64 verbunden. Insbesondere über den weiteren Switch 18 können weitere Anzeigemodule 16 angeschlossen werden, so dass die Anzahl der Anzeigemodule gut skaliert werden kann.

Jedes der Anzeigemodule umfasst eine Bildverarbeitungseinheit 66.

Im Betrieb der Kamera 10 werden von dem Bilderfassungsmodul 12 erzeugte Bilddaten von dem Sendemodul 64 an die Anzeigemodule 16 übermittelt, wobei das Sendemodul 64 lediglich eine Skalierung und/oder Komprimierung der Bilddaten vornimmt. Von den Anzeigemodulen 16 werden die Bilddaten empfangen und mittels der Bildverarbeitungseinheit 66 jeweils verändert, bevor die Bilddaten auf Displays 68 der Anzeigemodule 16 dargestellt werden. Beispielsweise können durch die Bildverarbeitungseinheiten 66 ein Color Grading, eine Falschfarbendarstellung, das Einblenden von Overlays und dergleichen vorgenommen werden.

Durch das Netzwerk-basierte Ausspielen der Bilddaten ist es möglich, verschiedene Anzeigemodule 16 gleichzeitig mit Bilddaten zu versorgen, ohne dass die Rechenressourcen der Kamera 10 stark belastet werden. Eine flexible Gestaltung des Monitorings für verschiedene Anwendungszwecke wird so ermöglicht.

### Bezugszeichenliste

- 10: Kamera
- 12: Bilderfassungsmodul
- 14: Bedienmodul
- 16: Anzeigemodul
- 18: Switch
- 20: Ethernet-Verbindung
- 22: Objektivaufnahmemodul
- 24: Motor
- 26: Objektiv
- 28: Motorsteuerung
- 30: Kamera-Positionierungsmodul
- 32: Audiomodul
- 34: Prozessormodul
- 36: Konvertierungsmodul
- 38: Funkmodul
- 40: Anschlussmodul
- 42: Zweites Anzeigemodul
- 44: Zentraleinheit
- 46: Gehäuse
- 48: Kameramodul
- 50: Netzwerkschnittstelle
- 52: Modulelektronik
- 54: Speichermodul
- 56: Geräteprofil
- 58: Geräteklasse
- 60: Sub-Klasse
- 62: Informationen zu Funktionsumfang
- 64: Sendemodul
- 66: Bildverarbeitungseinheit
- 68: Display

## Patentansprüche

1. Verteiltes Monitoring-System für Filmaufnahmen mit
einem Sendemodul (64) und einem Anzeigemodul (16), wobei das Sendemodul (64) und das Anzeigemodul (16) über ein Datennetzwerk (18, 20) miteinander verbunden sind,
wobei das Sendemodul (64) ausgebildet ist, Bilddaten und bevorzugt auch Audiodaten über das Datennetzwerk (18, 20) an das Anzeigemodul (16) zu übertragen, wobei das Sendemodul (64) zusätzlich Metadaten an das Anzeigemodul (16) überträgt, wobei das Anzeigemodul (16) ausgebildet ist, ein Anzeigen der Bilddaten und der Metadaten zu ermöglichen, und das Anzeigemodul (16) eine Bildverarbeitungseinheit (66) aufweist, welche ausgebildet ist, eine Veränderung der Bilddaten vorzunehmen, bevor die Bilddaten angezeigt werden.

2. Monitoring-System nach Anspruch 1,
wobei die Veränderung der Bilddaten eine Änderung der Auflösung, eine Änderung des Farbraums, eine Änderung der Bildwiederholrate, eine Farbveränderung und/oder eine Falschfarbendarstellung umfasst,
wobei die Bildverarbeitungseinheit (66) bevorzugt ausgebildet ist, zur Änderung des Farbraums und/oder für die Farbveränderung einen Lookup-Table (LUT) auf die Bilddaten anzuwenden.

3. Monitoring-System nach zumindest einem der vorstehenden Ansprüche, wobei das Anzeigemodul (16) ausgebildet ist, den Bilddaten zumindest einen Teil der Metadaten bei der Anzeige zu überlagern und beispielsweise eine Schärfe- und/oder Belichtungsindikation den Bilddaten zu überlagern.

4. Monitoring-System nach zumindest einem der vorstehenden Ansprüche, wobei die Metadaten Kamerastatusinformationen, Farbrauminformationen, Fokusinformationen, Belichtungsinformationen und/oder Waveforminformationen umfassen.

5. Monitoring-System nach zumindest einem der vorstehenden Ansprüche, wobei das Anzeigemodul (16) ausgebildet ist, die Übertragung der Bilddaten und/oder der Metadaten bei dem Sendemodul (64) anzufordern.

6. Monitoring-System nach zumindest einem der vorstehenden Ansprüche, wobei das Sendemodul (64) eine Kamera (10) ist oder Teil einer Kamera (10) ist, wobei die Bilddaten durch einen Bildsensor der Kamera (10) erfasst wurden,
wobei das Sendemodul (64) bevorzugt ausgebildet ist, die Bilddaten nach der Erfassung durch den Bildsensor direkt über das Datennetzwerk (18, 20) auszugeben,
wobei das Sendemodul (64) weiter bevorzugt ausgebildet ist, die Bilddaten mit einer Framerate über das Datennetzwerk (18, 20) zu übertragen, die der Framerate bei der Erfassung durch den Bildsensor oder der Framerate eines Bilderfassungsmoduls (12) entspricht.

7. Monitoring-System nach Anspruch 6,
wobei die Kamera (10) eine modulare und insbesondere verteilte elektronische Kamera (10) ist, wobei die Kamera (10) das Bilderfassungsmodul (12) umfassend den Bildsensor sowie eine mit dem Bildsensor gekoppelte Bildverarbeitungseinheit aufweist,
wobei die Kamera (10) ein Funktionsmodul, beispielsweise ein Bedienmodul (14) zur Steuerung und/oder Konfiguration der Kamera (10) umfasst, wobei das Bilderfassungsmodul (12), das Funktionsmodul und das Anzeigemodul (16) Kameramodule (12, 14, 16, 22, 30, 32, 34, 36, 38, 40, 42, 48, 64) sind, wobei das Bilderfassungsmodul (12), das Bedienmodul (14) und das Anzeigemodul (16) mittels des Datennetzwerks (18, 20) miteinander verbunden sind, wobei das Datennetzwerk (18, 20) eine Verteileinheit (18) aufweist, welche ausgebildet ist, Daten über das Datennetzwerk (18, 20) von den Kameramodulen (12, 14, 16, 22, 30, 32, 34, 36, 38, 40, 42, 48, 64) zu empfangen und Daten von einem der Kameramodule (12, 14, 16, 22, 30, 32, 34, 36, 38, 40, 42, 48, 64) zu zumindest einem der anderen Kameramodule (12, 14, 16, 22, 30, 32, 34, 36, 38, 40, 42, 48, 64) weiterzuleiten.

8. Monitoring-System nach zumindest einem der vorstehenden Ansprüche,
wobei das Sendemodul (64) ausgebildet ist, die Bilddaten, insbesondere lediglich, zu skalieren und/oder zu komprimieren,
wobei das Sendemodul (64) ausgebildet ist, die Skalierung und/oder Komprimierung der Bilddaten basierend auf den Einstellungen der Anzeige der Bilddaten auf dem Anzeigemodul (16) vorzunehmen.

9. Monitoring-System nach zumindest einem der vorstehenden Ansprüche, wobei das Sendemodul (64) ausgebildet ist, die Bilddaten, die Audiodaten und/oder die Metadaten in separaten Datenströmen über das Datennetzwerk (18, 20) zu übertragen, bevorzugt in synchronisierten Datenpaketen.

10. Monitoring-System nach zumindest einem der vorstehenden Ansprüche, wobei die Bilddaten einen Farbraum aufweisen, welcher größer als der Farbraum von Rec.709 ist.

11. Monitoring-System nach zumindest einem der vorstehenden Ansprüche, wobei das Monitoring-System ein oder mehrere weitere Anzeigemodule (42) umfasst, welche über das Datennetzwerk (18, 20) mit dem Sendemodul (64) verbunden sind, wobei die weiteren Anzeigemodule (42) ausgebildet sind, die Bilddaten und die Metadaten anzuzeigen, und die weiteren Anzeigemodule (42) jeweils eine separate Bildverarbeitungseinheit (66) aufweisen, welche jeweils ausgebildet ist, eine Veränderung der Bilddaten vorzunehmen, bevor die Bilddaten angezeigt werden.

12. Monitoring-System nach Anspruch 11,
wobei die Anzeigemodule (16, 42) ausgebildet sind, die Bilddaten synchronisiert anzuzeigen.

13. Monitoring-System nach zumindest einem der vorstehenden Ansprüche, wobei das Sendemodul (64) und/oder die Anzeigemodule (16, 42) als eigenständige Netzwerkkomponenten ausgebildet sind.

14. Monitoring-System nach zumindest einem der vorstehenden Ansprüche, wobei das Anzeigemodul (16) eine oder mehrere Schnittstellen zum Anschließen eines Monitors aufweist, wobei die Schnittstellen insbesondere einen Displayport (DP), Serial Digital Interface (SDI), Mobile Industry Processor Interface (MIPI) und/oder einen High Definition Multimedia Interface (HDMI) Anschluss umfasst.

15. Verfahren zum Monitoring bei Filmaufnahmen, bei welchem ein Sendemodul (64) und ein Anzeigemodul (16) über ein Datennetzwerk (18, 20) miteinander verbunden werden, wobei das Sendemodul (64) Bilddaten und bevorzugt auch Audiodaten über das Datennetzwerk (18, 20) an das Anzeigemodul (16) überträgt, wobei das Sendemodul (64) zusätzlich Metadaten an das Anzeigemodul (16) überträgt, wobei das Anzeigemodul (16) eine Anzeige der Bilddaten und der Metadaten ermöglicht, und das Anzeigemodul (16) eine Veränderung der Bilddaten vornimmt, bevor die Bilddaten angezeigt werden.
